# EUROPÄISCHE PATENTANMELDUNG

(11) **EP 0 547 485 A1**
(43) Veröffentlichungstag der Anmeldung: **23.06.1993**
(21) Anmeldenummer: 92120947.4
(22) Anmeldetag: 09.12.1992
(51) Int. Cl.: B65B 5/06, B65G 57/14, B65B 57/20

(54) **Stapel- und Verpackungsmaschine für Einzelstücke wie Kleinbackwaren**

(30) Priorität: 18.12.1991 DE 4141830
(71) Anmelder: Waldinger, Philipp, D-85464 Finsing (DE)
(72) Erfinder: Waldinger, Philipp, D-85464 Finsing (DE)
(74) Vertreter: Baumann, Eduard, Dipl.-Phys.

(57) **Zusammenfassung**

Die Erfindung bezieht sich auf eine Stapel- und Verpackungsmaschine für Einzelstücke wie Kleinbackwaren und dergleichen, insbesondere für tiefgefrorene Brezeln.

Um das Stapeln und Abfüllen in eine Tüte vollautomatisch durchzuführen, sind eine Zufuhr-Förderbahn (20) und eine Ablageeinrichtung (21) auf eine Stapelplatte (1,1') vorgesehen, von der die einzelnen Teile (11) in eine darunter angeordnete Tüte abgefüllt werden.

## Beschreibung

Die Erfindung bezieht sich auf eine Stapel- und Verpackungsmaschine für Einzelstücke wie Kleinbackwaren und dergleichen, insbesondere tiefgefrorene Brezeln, gemäß dem Oberbegriff des Anspruches 1.

Die Maschine ist prinzipiell bei allen nicht zu großen Teilen einsetzbar, vorzugsweise gut stapelbaren flachen Teilen. Das Material kann beliebig, beispielsweise Kunststoff oder Metall sein. Insbesondere soll damit das Stapeln einzelner eingefrorener Brezeln oder dergleichen und das Einfüllen in eine gemeinsame Tüte vereinfacht werden. Diese Kleinbackwaren werden bisher einzeln auf einem flachen Tablett oder durch einen Durchlauffroster in einer Tiefkühleinrichtung in kürzester Zeit eingefroren und dann von Hand in Tüten eingefüllt, wobei sie in diesem Zustand für die endgültige Lagerung in einen Tiefkühlschrank oder dergleichen gelagert werden können, um im Bedarfsfall wieder herausgenommen werden zu können.

Aus der DE-39 43 395 A1 ist eine Stapel- und Verpackungsmaschine gemäß dem Oberbegriff des Anspruches 1 bekannt. Bei dieser Maschine werden Beutel, die insbesondere mit Riesel- oder fließfähiger Beutelware gefüllt sind, über ein Förderband unmittelbar auf eine erste Stapelplatte abgelegt, die an einem ersten Gestell so gelagert ist, daß sie nach unten abgesenkt werden kann und darüber hinaus seitlich verschoben werden kann. Nach Stapelung der gewünschten Stückzahl wird von oben eine zweite Stapelplatte eines zweiten Lagergestelles über den Stapel geschoben, die erste Stapelplatte wird seitlich versetzt und nach unten in einen Führungsschacht eingelegt, wobei ein Ablageblech innerhalb des Führungsschachtes allmählich bis zu einem Unterende absenkbar ist. Danach wird die ganze Vorrichtung um 90^{o} in die Horizontale gedreht, seitlich herausgeschoben, der Führungsschacht wird entfernt, stattdessen wird ein von unten zugeführter Kartenzuschnitt um den zwischen zwei Platten eingeklemmten Stapel herumgeführt, die so entstandene Verpackungseinheit wird entfernt. Diese Maschine ist auf ganz bestimmte unabhängig aufeinander stapelbare rechteckförmige Beutel eingeschränkt, wobei eine ebene Oberfläche noch durch eine eigene Egalisiereinrichtung auf dem Förderband erzielt werden muß. Die Beutel müssen imstande sein, ohne seitliche Führung auf der Stapelplatte zu verharren. Wegen unausweichlicher Ungleichmäßigkeiten besteht die Gefahr, daß der ganze Stapel herunterstürzt oder sich so seitlich verschiebt, daß er nicht ordnungsgemäß in den zunächst senkrechten Führungsschacht eingeschoben werden kann. Zur Aufrechterhaltung eines kontinuierlichen Betriebes sind zwei unabhängige aufwendige absenkbare Halterungen für zwei Stapelplatten vorgesehen. Insbesondere ist ein aufwendiger Einführ-Festhalte- und Schwenkmechanismus für jeden Stapel erforderlich, gefolgt von einer seitlichen Verschiebung, einer Entfernung des Führungsschachtes und der Ummantelung mit einem Kartonzuschnitt zur Bildung der fertigen Verpackung. Es ist nur eine Verpackung mit steifen Kartons und nur mit einer ganz bestimmten Formgebung möglich. Die ganze Maschine ist sehr aufwendig und somit teuer in der Anschaffung, der Anwendungsbereich ist sehr eingeschränkt, die Maschine ist dennoch wegen der offenen Stapelung störanfällig. Eine Verpackung nicht stapelbarer Teile, etwa von Lebensmitteln wie Semmeln, von Maschinenkleinteilen wie Schrauben etc. ist nicht möglich, auch das Verpacken in nicht formbeständige Materialien wie flexiblen Beuteln aus Papier oder Plastik, ist nicht möglich. Wegen des Aufwandes, des erforderlichen Zusammenwirkens einer Reihe von Mechanismen und der Störanfälligkeit ist ein vollautomatischer Betrieb nur schwer möglich.

Der Erfindung liegt das Problem zugrunde, eine Stapel- und Verpackungsmaschine der eingangs eingeführten Art zu schaffen, die ein zuverlässiges vollautomatisches Einfüllen unterschiedlicher, auch nicht stapelbarer Einzelteile, einschließlich Kleinbackwaren und auch in flexible Verpackungen ermöglicht.

Das Problem wird erfindungsgemäß durch die Merkmale des Kennzeichens des Anspruches 1 gelöst. Weitere Ausgestaltungen der Erfindung sind in den Unteransprüchen unter Schutz gestellt.

Zur Vereinfachung wird zur Aufzählung der vielen unterschiedlichen Merkmale auf die Ansprüche Bezug genommen. Vorgesehen sind im wesentlichen eine Stapelplatte für die Einzelstücke, eine Zufuhrbahn und eine Ablageeinrichtung der Einzelstücke, sowie eine vertikale Bewegungseinrichtung für die im Einsatz befindliche Stapelplatte über eine entsprechende Lagerung, um jeweils eine geringe Ablagehöhe für jedes Teil zu erreichen etc.

Nach Erreichen der gewünschten Anzahl der gestapelten Stücke kann die Stapelplatte vorzugsweise seitlich ausschwenken, wodurch der ganze Stapel in eine darunter liegende Tüte fallen kann. Der Schwenkwinkel beträgt vorzugsweise 180^{o}, wobei wechselseitig eine zweite gegenüber angeordnete Stapelplatte in eine obere Stapel-Anfangsstellung eingeschwenkt werden kann..

Nach einer bevorzugten Ausführung erzeugt sich diese Maschine auch die Tüten selbst aus einer auf einer Folienrolle befindlichen und vorzugsweise automatisch maschinell abrollbaren Kunststoffbahn, Papierbahn oder dergleichen. Diese Bahn kann um ein Rohr gewickelt, abgeschnitten und die beiden Kanten können miteinander verbunden werden, beispielsweise miteinander verschweißt werden.

Für den Betrieb ist eine einfache Steuerung sinnvoll und ausreichend, welche zum einen Stück für Stück übereinander auf der Stapelplatte ablegt und nach dem Erreichen der gewünschten gestapelten Einzelstücke durch einen Schwenkvorgang das Einfüllen in die darunter angeordnete Tüte bewirkt und einen neuen Stapelvorgang auslöst.

Ein Ausführungsbeispiel der Erfindung ist in der Zeichnung dargestellt. Es zeigt:
- Fig. 1: ein Gesamtschema der Maschine mit Zufuhreinrichtung, Ablageeinrichtung, Stapelvorrichtung und Lagereinrichtung sowie schematische Steuereinrichtung.
- Fig. 2: Einzelheiten der Maschine unter Weglassen der Zufuhrbahn und Ablagevorrichtung, jedoch mit Schwenkeinrichtung.
- Fig. 3: die Anordnung für die Halterung und Herstellung der Tüte,
- Fig. 3a: die Anordnung von Fig. 3 in einer nachfolgenden Phase,
- Fig. 4: eine andere, einfachere Halterung für fertige Tüten,
- Fig. 4a: die Halterung von Fig. 4 in einer nachfolgenden Phase.

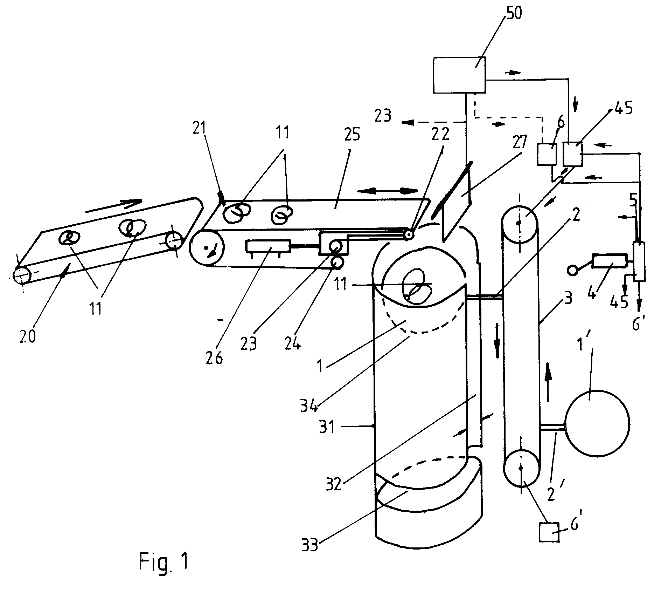

In der Zeichnung werden gleiche Teile mit gleichen Bezugszeichen versehen. Gemäß Fig. 1 werden von links die einzelnen Teile 11, hier tiefgefrorene einzelne Brezeln, über eine Förderbahn in Form eines angetriebenen Förderbandes 20 in Pfeilrichtung der Stapel- und Verpackungsmaschine zugeführt. Die Zuführbahn 20 für die einzelnen Teile 11 übergibt diese an die Ablagevorrichtung 21, die ebenfalls aus einem Förderband oder dergl. bestehen kann, dessen hintere Achse vorzugsweise angetrieben ist. Um die Ablage auszulösen, stoßen die einzelnen Stücke 11 am vorderen, rechts dargestellten Ende auf ein Auslöseblech 27, das den Ablagemechanismus auslöst, wobei es beispielsweise durch das Schwenken einen entsprechenden Schaltkontakt auslöst. Stattdessen könnte auch eine Lichtschranke oder dergleichen eingesetzt werden. Die Ablage erfolgt durch das Zurückziehen der rechten Vorderkante des Förderbandes, so daß das Stück 11 beispielsweise die Brezel, in einer im wesentlichen horizontalen Stellung auf die darunter angeordnete Stapelplatte 1 fällt. Das Zurückziehen wird gemäß Fig. 1 durch eine Hydraulik oder Pneumatik 26 ausgelöst, die auf die Achse einer weiteren zurückziehbaren Lagerung 23 am Untertrum des Förderbandes 25 einwirkt, wobei noch eine weitere ortsfeste Lagerung 24 vorhanden ist. Das Förderband 25 ist somit durch zwei ortsfeste und zwei zurückziehbare Lager geführt und dadurch stets gespannt. Nach dem Ablegen eines vorne angekommenen Teiles 11 schiebt die Hydraulik oder Pneumatik 26 des Rückziehteiles die bewegliche Rollenlagerung 23 wieder nach vorne rechts bis das nächste Teil 11 das Auslöseblech 27 berührt.

Das Zurückziehen der Lagerung 23, um ein Herunterfallen des vorne am Auslöseblech 27 anstoßenden Einzelstückes auszulösen, oder des eine Lichtschraube durchlaufenden Einzelstückes oder dergleichen wird durch ein Auslösesignal des am Auslöseblech 27 oder dergleichen angeordneten Schaltkontaktes ausgelöst. Dieses Auslösesignal wird gleichzeitig einer Zählschaltung 50 zugeführt, die bei Erreichen der einstellbaren Zahl von zu stapelnden Einzelstücken 11 an eine Wechselsteuerung 45 ein Wechselsignal zum alternativen Schwenken der gegenüberliegenden Drehlager 77 um 180^{o} liefert. Das Schwenken kann aber aufgrund einer UND-Steuerung oder dergleichen erst erfolgen, wenn zusätzlich von einem Endschalter 4 eventuell über eine weitere Steuerung 5 der Wechselsteuerung 45 ein Stapelendsignal zugeführt wird, wobei der Schaltkontakt in der obersten Stellung der nicht betriebenen Stapelplatte 1' bzw. der untersten Stellung der Betriebs-Stapelplatte 1 ausgelöst wird. Zu diesem Zeitpunkt wird dieses oder ein von der Zählschaltung 50 erzeugtes Signal dem Antrieb 6 für die Kette 3 zugeführt, um den Kettenantrieb für die Schwenkzeit anzuhalten und ihn danach wieder aufzunehmen. Der Kettenantrieb ist so ausgelegt, daß die Stapelplatte 1, 1' bei der niedrigsten einstellbaren Stapelzahl, z.B. 19 Stück, bereits in der untersten bzw. obersten Stellung ist und bis zum Erreichen der maximalen Stapelzahl, z.B. 28, dort verharrt. Das in dieser Phase entstehende Herabfallen der Einzelstücke aus etwas größerer Höhe ist akzeptabel.

Eine erste Stapelplatte 1 steht zu Beginn des Stapelvorganges in ihrer obersten Stellung. Über eine Lagerung 2 ist sie an einer in Pfeilrichtung nach unten antreibbaren Kette 3 befestigt, An der gegenüberliegenden Seite der Kette 3 ist in einer unteren Endstellung, d.h. um 180^{o} versetzt sich gegenüberliegend, eine zweite Stapelplatte 1' über eine entsprechende Lagerung 2' angeordnet, die in gleicher Weise nach oben bewegt wird, wie sich die Lagerung 2 mit der links angeordneten Stapelplatte 1 während des Stapelvorganges nach unten bewegt. Die Stapelplatte 1 ist von einem Schutzrohr 31 umgeben, damit die einzelnen Teile einen festen seitlichen Halt haben und auch bei Rüttelbewegungen nicht von der Stapelplatte 1 herunterfallen können. Damit eine Vertikalbewegung der Stapelplatte 1 möglich ist, hat dieses Stapelrohr 31 an der Seite der Kette 3 einen inneren vertikalen Schlitz 32.

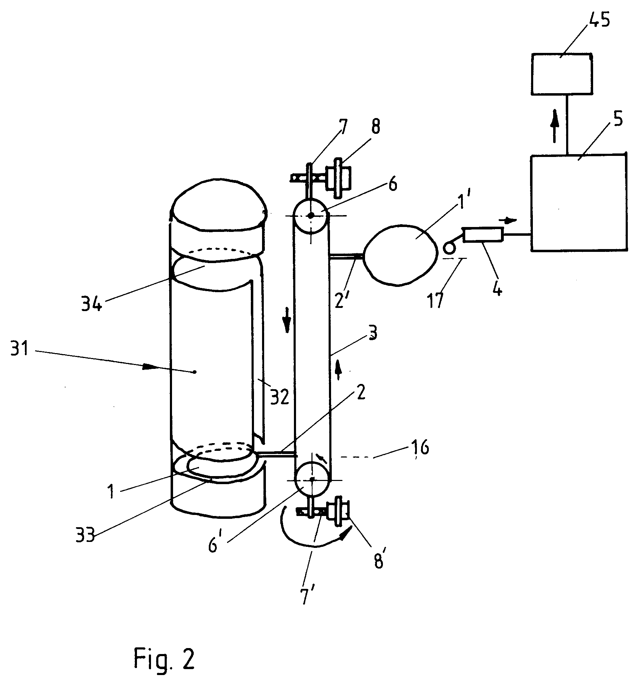

Wie weiter unten in Zusammenhang mit Fig. 2 näher erörtert wird, hat das Stapelrohr 31 weiterhin einen unteren horizontalen Schlitz 33 und einen oberen horizontalen Schlitz 34.

Wie ebenfalls weiter in Zusammenhang mit Fig. 2 erörtert wird, ist rechts ein Endschalter mit einem entsprechenden Schaltkontakt 4 vorgesehen, der ein Schaltsignal an eine Steuerung 5 liefert.

Fig. 2 zeigt zum einen mehr im Detail die Lagerung der Kette 3, die über ein angetriebenes unteres Rollenlager 6' und ein oberes Rollenlager 6 vertikal angetrieben wird. Die Rollenlager 6 und 6' sind in entsprechenden Drehlagern 7 und 7' drehbar gelagert und können aufgrund eines zugeordneten oberen und unteren Schwenkantriebes 8 und 8' ruckartig um 180^{o} geschwenkt werden. Dadurch ergibt sich ein Wechsel der beiden Stapelplatten, wobei die untere Stapelplatte 1 nach Beendigung um 180^{o} nach rechts und die obere Stapelplatte 1' um 180^{o} nach links bzw. abwechselnd umgekehrt in den horizontalen Schlitz 34 geschwenkt wird und ein neuer Stapelvorgang beginnen kann.

Gesteuert wird dieser Vorgang durch einen Endschalter 4 mit Schaltkontakt 17, der bei der Ankunft der rechten, nicht in Betrieb befindlichen Stapelplatte 1' einen Schaltkontakt schließt und ein sprechendes Schwenkbereitschafts- Schaltsignal an eine Steuerung 5 und die Wechselsteuerung 45 liefert. Wenn die eingestellte Stückzahl erreicht ist, löst dieses Signal gemeinsam mit einem von der Zählschaltung 50 gelieferten Wechselsignal den Schwenkmechanismus an den Schwenkantrieben 8 und 8' und einen Stapelvorgang aus. Gleichzeitig wird auch der Antrieb der Kette 3 in geeigneter Weise gesteuert, die während des Schwenkens angehalten werden muß. Der Antrieb für die Vertikalbewegung der Stapelplatte 1, 1' wird bei dieser Schwenkbewegung ausgekuppelt, um eine Vertikalverschiebung zu vermeiden.

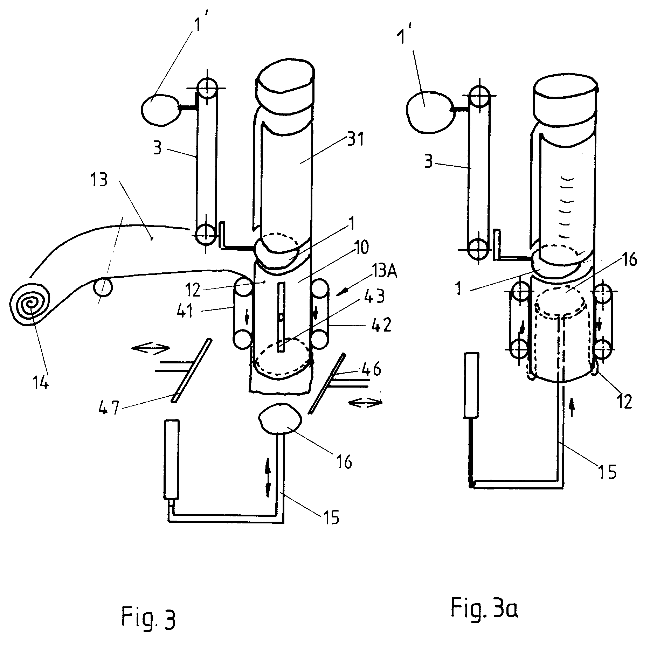

Fig. 3 zeigt die Halterung für die Tüte 12 unterhalb des Stapelrohres 31. Von einer Folienrolle 14 wird eine Folienbahn 13 über Rollen geführt und um die Halterung in Form des Halterohres 10 gewickelt. Wenn dieses Halterohr 10 vollständig umwickelt ist, löst eine nicht gezeigte senkrechte Messer-Schneide vorrichtung das Abschneiden der Folie unter Herabsenken des Messers aus. Anschließend wird ein Verbindemechanismus ausgelöst, vorzugsweise durch waagrechtes Heranführen einer Schweißvorrichtung 43 für die beiden Seitenkanten der Folie. Desgleichen wird die untere zylindrische Öffnung miteinander zu einem Boden verbunden, beispielsweise verschweißt. Dann wird die fertige Tüte abgeschnitten. Dies kann durch unten angeordnete zusammenwirkende horizontale Schweiß- und Schneidebalken 46, 47 geschehen, die beim Flachpressen des rohrförmigen Folienendes dieses verschweißen und abschneiden. Die Zufuhr der Folienbahn 13 unterbleibt bis zum Einleiten eines neuen Stapelvorganges nach dem Füllen und Wegführen der vollen Tüte nach unten. Außer Plastifolien können selbstverständlich auch Papierrollen verwendet werden, deren Kanten in geeigneter Weise miteinander verbunden, z.B. verklebt, werden.

Ein Hebemechanismus 15 kann einen Stempel 16 von unten in die rohrförmige Haltevorrichtung 10 stülpen, der hydraulisch oder pneumatisch über eine Steuerung betätigt werden kann.

Das Stülpen des Stempels 16 in das Rohrinnere hat zur Folge, daß der Stapel nach dem ruckartigen Ausschwenken der Stapelplatte 1 in der untersten Stellung nicht aus einer erheblichen Höhe nach unten fallen und evtl. zerbrechen kann, sondern daß er weich aufgefangen wird. Anschließend wird der Stempel 16 nach unten geführt, die volle Tüte kann abgenommen werden, nachdem sie gegebenenfalls oben verschweißt wurde. Danach kann das Aufwickeln einer neuen Tüte 12 etc. beginnen. Selbstverständlich kann die Halterung auch eine bereits fertige Tüte aufnehmen, die dann am unteren Ende des Stapelrohres 31 befestigt werden kann.

Der Antrieb und das Umwickeln der Halterung der Tüte 12 in Form eines Halterohres 10 geschieht mit Hilfe eines allgemein mit 13A bezeichneten Antriebs, der aus zwei angetriebenen vertikal am Halterohr 10 gegenüber angordneten Förderbändern 41,42 besteht, durch welche die Folienbahn 13 geführt und um das Halterohr 10 umwickelt wird.

Unterhalb des Halterohres 16 ist eine Hydraulik oder Pneumatik 15 angeordnet, die einen Stempel 16 in das Innere des Halterohres 10 nach oben schieben kann, wobei auch die ganze Tüte an der Innenwand des Halterohres 16 nach oben bis zum oberen Ende gestülpt wird
Während Fig. 3 den Zustand vor dem Einführen des Stempels 16 zeigt, stellt Fig. 3 a die obere Endstellung des Stempels 16 dar.

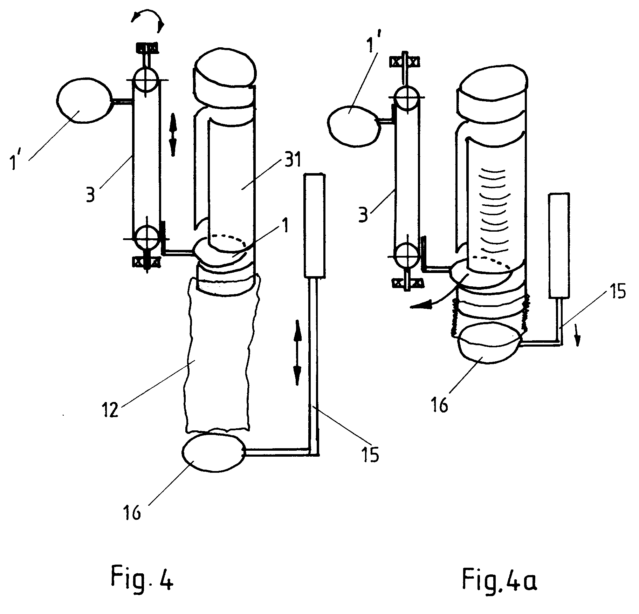

Fig. 4 zeigt eine einfachere Anordnung des Befüllens der Tüte 12 in Form eines Plastikbeutels, die einfach am unteren Ende des Stapelrohres 31 angeklemmt wird. Der Stempel 16 des Hebemechanismus 15 hebt hierbei ohne Stülpvorgang den Boden der Tüte 12 nach oben und senkt ihn nach dem Ausschwenken der Stapelplatte 1, 1' wieder ab.

## Patentansprüche

1. Stapel- und Verpackungsmaschine für Einzelstücke, mit
a) wenigstens einer seitlich bewegbaren Stapelplatte (1, 1'), auf welche die Einzelstücke (11) stapelbar sind,
b) einer vertikal beweglichen und in Abhängigkeit von der Anzahl der gestapelten Einzelstücke (11) steuerbaren Lagerung (2, 2', 3) der wenigstens einen Stapelplatte (1, 1'),
c) einer Steuerungseinrichtung (4, 5, 6) zur Absenkung der Stapelplatte (1, 1') während des Stapelvorganges,
d) einer Zuführbahn (20) für die Zufuhr der Einzelstücke (11) zur wenigstens einen Stapelplatte (1, 1'),
e) einem Führungsschacht (31) für den Stapel der gestapelten Einzelstücke (11),
f) einer gemeinsamen Umhüllung (12) für den Stapel von Einzelstücken (11),
gekennzeichnet durch eine Halteeinrichtung (10) für eine Umhüllung (12) einschließlich eines flexiblen Beutels oder einer Tüte unterhalb des Führungsschachtes (31), in welche der Stapel von Einzelstücken (11) nach dem seitlichen Entfernen der Stapelplatte (1, 1') in ihrer untersten Stellung nach unten einführbar ist.

2. Maschine nach Anspruch 1, gekennzeichnet durch eine Ablageeinrichtung (21-27) für das stückweise Ablegen der Einzelstücke (11) auf die Stapelplatte (1, 1').

3. Maschine nach Anspruch 1 oder 2, gekennzeichnet durch eine Schwenkvorrichtung (7, 7', 8, 9) für die Stapelplatte (1, 1') in einer unteren (16) und einer oberen Stellung (17).

4. Maschine nach einem der Ansprüche 1 bis 3, dadurch gekennzeichnet, daß die Zufuhrbahn ein Förderband (20) ist, an das die Ablagevorrichtung (21 bis 27) abschließt, deren vorderes Ende die Einzelstücke (11) stückweise auf die Stapelplatte (1,1') ablegen kann.

5. Maschine nach Anspruch 4, dadurch gekennzeichnet, daß die Ablagevorrichtung (21) ein angetriebenes Förderband (25) enthält, dessen vorderes Ende eine zurückfahrbare Bandlagerung (22) zum Ablegen der Einzelstücke (11) auf die Stapelplatte (1,1') aufweist.

6. Maschine nach Anspruch 5, gekennzeichnet durch eine weitere ortsfeste Bandlagerung (24) des Förderbandes (25) an seinem Untertrum, die mit einer weiteren zurückziehbaren Bandlagerung (23) am Untertrum des Förderbandes (25) zusammenwirkt.

7. Maschine nach Anspruch 6, gekennzeichnet durch eine Rückziehvorrichtung für die am Untertrum des Förderbandes (25) angeordnete zurückziehbare Bandlagerung (23), vorzugsweise in Form einer auf ihre Lagerachsen angreifende steuerbare Hydraulikeinrichtung oder Pneumatikeinrichtung (26).

8. Maschine nach einem der Ansprüche 3 bis 7, gekennzeichnet durch eine rohrförmige Halteeinrichtung (10) unterhalb der Stapelplatte (1,1'), um welche eine Papierbahn oder eine Plastikfolie (13) wickelbar ist, mit einer Verbindeeinrichtung, vorzugsweise vertikaler Schweißeinrichtung (43), für die Seitenkanten der Papierbahn oder Plastikfolie, einer Verbindeeinrichtung, vorzugsweise Schweißeinrichtung (46, 47), für die Unterkante der rohrförmigen flachgepreßten Papierbahn oder Plastikfolie, und mit einer kombinierten Abschneideeinrichtung, um einen Boden für den Beutel oder die Tüte (12) zu erhalten.

9. Maschine nach Anspruch 8, dadurch gekennzeichnet, daß die untere Schneideeinrichtung ein horizontal bewegliches und steuerbares Messer ist und daß die Verbindeeinrichtung ein horizontal bewegliches Folienschweißgerät ist, wobei zwei Schweißbacken (46, 47) mit integriertem ausfahrbarem horizontalem Messer zusammenwirken.

10. Maschine nach Anspruch 8 oder 9, dadurch gekennzeichnet, daß die das Ausgangsmaterial für die Tüte (12) bildende Folie auf einer Folienrolle (14) aufgewickelt ist, über Führungsrollen geführt, durch einen Antrieb (13 A, 41, 42) angetrieben, geführt gehalten, der rohrförmigen Halteeinrichtung (10) zugeführt, dort beidseitig befestigt, gebremst und nach unten bewegt werden kann.

11. Maschine nach einem der Ansprüche 8 bis 10, gekennzeichnet durch einen Hebemechanismus (15) für das Anheben und Absenken des Tütenbodens und ggf. das Einführen eines Stempels (16) in die Rohrhalterung (10) für die Tüte (12).

12. Maschine nach einem der Ansprüche 1 bis 11, gekennzeichnet durch eine Lagerung (2,2') für die Stapelplatte (1,1') an einer Kette (3), die durch eine Antriebseinrichtung wie eine angetriebene Kettenrolle (7) in Abhängigkeit von einer Steuerung (5) angetrieben ist.

13. Maschine nach Anspruch 12, dadurch gekennzeichnet, daß die Steuerung (5) von einem Schaltkontakt (4) beim Kontakt mit der Stapelplatte (1,1') betätigbar ist, um die Antriebsrichtung für die angetriebene Kette (3) umzukehren.

14. Maschine nach einem der Ansprüche 12 oder 13, gekennzeichnet durch eine Schwenkvorrichtung für die angetriebene Kette (3), bestehend aus einer oberen (7) und einer unteren Drehlagerung (7') für eine obere (6) und eine untere Kettenrolle (6') und eine mit der Drehlagerung (7,7') in Eingriff bringbare Schwenkeinrichtung (8,8'), die ebenfalls von der Steuerung (5) in Abhängigkeit von dem Kontaktsignal des Kontaktes (4) gesteuert wird, gegebenenfalls über eine geeignete Verzögerungseinrichtung.

15. Maschine nach einem der Ansprüche 1 bis 14, dadurch gekennzeichnet, daß an zwei gegenüberliegenden Seiten der angetriebenen vertikalen Kette (3) je eine Stapelplatte (1,1') angeordnet ist, die in Abhängigkeit von der untersten Stellung der im Stapelbetrieb befindlichen ersten Stapelplatte (1) und gleichzeitig der obersten Stellung der gegenüberliegenden zweiten Stapelplatte (1') ruckartig gleichzeitig um 180^{o} schwenkbar sind, derart, daß die gestapelten Einzelstücke (11) nach unten in die bereitstehende Tüte (12) fallen, und daß gleichzeitig die zweite Stapelplatte (1') in die obere Anfangsstellung (17) für den Stapelbetrieb gelangt.

16. Maschine nach einem der Ansprüche 1 bis 15, gekennzeichnet durch ein Stapelrohr (31) an der Stapelseite der Maschine, die einen Vertikalschlitz (32) für die Vertikalbewegung der Lagerung (2,2') aufweist, und die im Bereich der untersten (33) und der obersten Stellung (34) der Stapelplatte (1,1') je einen Horizontalschlitz aufweist, um ein gleichzeitiges Ausschwenken bzw. Einschwenken der zusammenwirkenden Stapelplatten (1,1') zu ermöglichen.

17. Maschine nach einem der Ansprüche 1 bis 16, gekennzeichnet durch eine einstellbare Zählschaltung (50) zur Festlegung einer gewünschten Anzahl der zu stapelnden und in eine darunter angeordnete Tüte (12) einzufüllenden Einzelstücke (11), wobei nach erreichter Stückzahl ein Umschwenken und ein neuer Stapelvorgang ausgelöst wird.

18. Maschine nach Anspruch 17, dadurch gekennzeichnet, daß die Stapelplatte (1) bei der niedrigsten einstellbaren Anzahl von Einzelstücken (11) in der untersten Stellung angeordnet ist und daß das Auschwenken und Einleiten eines neuen Stapelvorganges durch eine Verzögerungsschaltung innerhalb der Steuerung (5) variierbar ist, die den Schwenkmechanismus erst nach Erreichen der eingestellten Stückzahl am Zählwerk und dann einer entsprechenden einstellbaren Verzögerungszeit auslöst.

19. Maschine nach einem der Ansprüche 1 bis 17, dadurch gekennzeichnet, daß das Auslöseblech (27), die Lichtschranke oder dergleichen bei jedem ankommenden Einzelstück (11) ein Signal an die Zählschaltung (50) liefert, die bei erreichter eingestellter Stückzahl ein Wechselsignal an eine Wechselsteuerung (45) liefert, die bei gleichzeitig vorhandenem Stapelendsignal eines Endschalters (4) einen Schwenkvorgang der Stapelplatte (1,1') und neuen Stapelvorgang auslöst.

20. Maschine nach einem der Ansprüche 1 bis 17, dadurch gekennzeichnet, daß durch eine vertikale Verstellbarkeit des Endschalters bzw. Schaltkontaktes (4) der Stapelvorgang entsprechend der gewünschten eingestellten Anzahl der Einzelstücke (11) veränderbar ist, wobei gegebenenfalls die oberste bzw. unterste Stellung der Stapelplatten (1,1') durch eine vorhergehende rasche Vertikalbewegung der angetriebenen Kette (3) oder durch schnelle Vertikalbewegung der Stapelplatte erreichbar ist und dadurch am Schaltkontakt (4) ist, bevor die eingestellte Stückzahl erreicht ist.

21. Maschine nach einem der Ansprüche 1 - 20, gekennzeichnet durch eine Lichtschranke oder vorzugsweise ein Auslöseblech (27) am vorderen Ende der Zuführbahn (21), an welches jedes Einzelstück (11) anstößt und ein Zurückziehen des vorderen Abschnittes der Zuführbahn (21) bewirkt, so daß das Teil nach unten auf die Stapelplatte (1,1') fällt.

22. Maschine nach Anspruch 21, dadurch gekennzeichnet, daß das Auslöseblech (27) kippbar ist, dadurch einen Schaltkontakt und einen Zählimpuls für die Zählschaltung (50) sowie für die zurückfahrbare Bandlagerung (22) und ggf. einen schrittweisen Kettenantrieb auslöst.
